# EUROPEAN PATENT SPECIFICATION

(11) **EP 2 032 004 B1**
(45) Date of publication and mention of the grant of the patent: **30.12.2009**
(21) Application number: 06766306.2
(22) Date of filing: 31.05.2006
(51) Int. Cl.: A47J 31/30

(54) **COFFEE MAKER WITH CONTROLLED DELIVERY SYSTEM**
KAFFEEMASCHINE MIT GESTEUERTEM AUSGABESYSTEM
CAFETIÈRE À SYSTÈME DE DÉBIT CONTRÔLÉ

(43) Date of publication of application: 11.03.2009
(73) Proprietor: Bialetti Industrie S.p.A., 25030 Coccaglio (BS) (IT)
(72) Inventor: RANZONI, Francesco, 25030 Coccaglio (Brescia) (IT)
(74) Representative: Pulieri, Gianluca Antonio
(86) International application number: PCT/IT2006/000410
(87) International publication number: WO 2007/138622

(56) References cited:
- WO-A-98/17160
- US-A- 3 077 156

## Description

. The object of the present invention is a coffee maker, particularly a coffee maker with controlled delivery system.

. Known domestic coffee makers generally comprise a lower boiler, an upper vessel and a vertical duct connecting the boiler to the vessel. When the coffee maker is placed on a heat source, such as a cooker, the temperature and pressure within the boiler increase. In these conditions, the duct is suitable to take the pressurized water from the lower boiler, cause it to pass through the chamber containing the coffee powder (the so-called "extraction" step) and then cause it to flow into the upper vessel. The coffee beverage is thus obtained.

. These domestic coffee makers, which have been known for a long time and appreciated for their easiness of use, are not without defects.

. It is known, in fact, that the temperature and pressure of the water rising up the duct are not constant when the coffee maker is being heated up and the coffee beverage is being consequently produced.

. Particularly, the water starts to rise along the duct under conditions of low temperature (about 45-55°C) and low pressure (about 0.1-0.2 bars in differential terms). As the amount of water decreases within the boiler, at the same heat supplied by the cooker, the water temperature increases faster and faster.

. Due to the quick temperature increase, steam is formed within the boiler, and hence the pressure to which the water raising along the duct from the boiler is subjected also increases as quickly. It follows that the last water passing through the chamber containing the coffee powder is subjected to high temperature (about 95-100°C) and high pressure (about 0.5-1.5 bars) conditions.

. Finally, when the water level within the boiler decreases below the draught level of the duct, the duct is filled by the high-temperature (100-105°C) steam being within the boiler.

. It has been found that the coffee beverage obtained with water at a temperature less than 90-95 °C has much better and more valuable organoleptic characteristics than that obtained with water, and mainly, with steam at a higher temperature.

. It has been found, particularly, that coffee powder releases unpalatable substances having a burnt, bitter and astringent taste when it is passed through by water and mainly steam at high temperatures (100-105°c). These conditions determine the so-called "overextraction" step.

. When the water pressure and temperature conditions are changed upon extraction, the substances released by the coffee powder into the water are also changed.

. The extraction pressure and temperature further depend on the amount of water that is initially filled in the boiler, the amount, compactness and grain size of the coffee powder poured in the suitable chamber and on the type and adjustment of the heat source used to heat the coffee maker.

. In the known domestic coffee makers, the extraction conditions thus strongly depend on the selections made by the user and are hardly predictable. Document US-A-3077156 discloses a coffee maker according to the preamble of independent claim 1.

. The object of the present invention is to devise and provide a domestic coffee maker with controlled delivery system which allows overcoming the drawbacks stated above with reference to prior art.

. Particularly, the task of the present invention is to provide a coffee maker which allows for an easy control of the temperature and pressure conditions of the water passing through the coffee powder during the extraction step.

. This object and these tasks are achieved by means of a domestic coffee maker in accordance with claim 1.

. Further characteristics and the advantages of the coffee maker according to the invention will be understood from the description below of preferred embodiments thereof, which is merely illustrative and non-limiting, with reference to the annexed figures, in which:

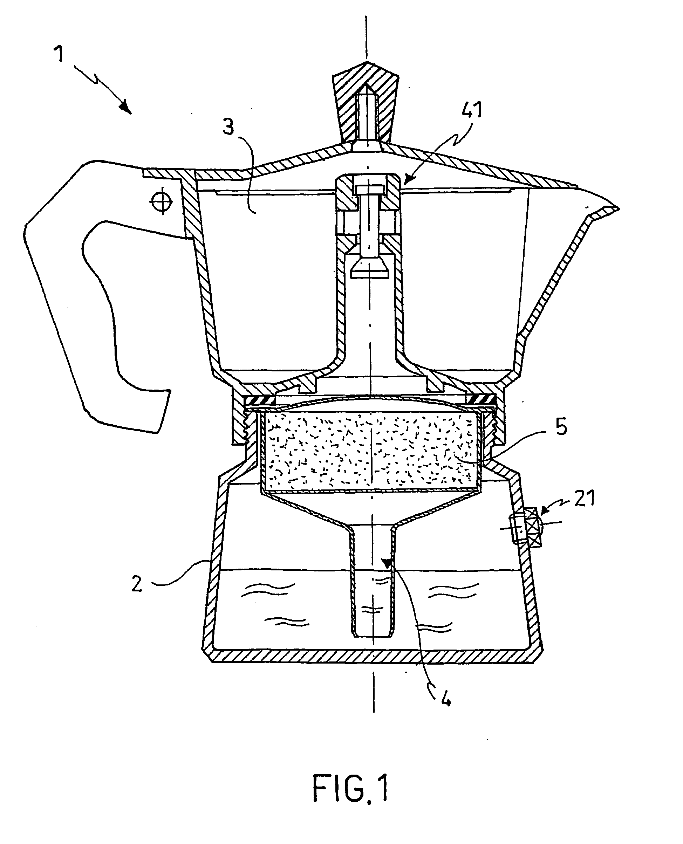

. Fig. 1 to 5 illustrate a side sectional view of a coffee maker according to the invention, in a sequence of subsequent operating configurations;

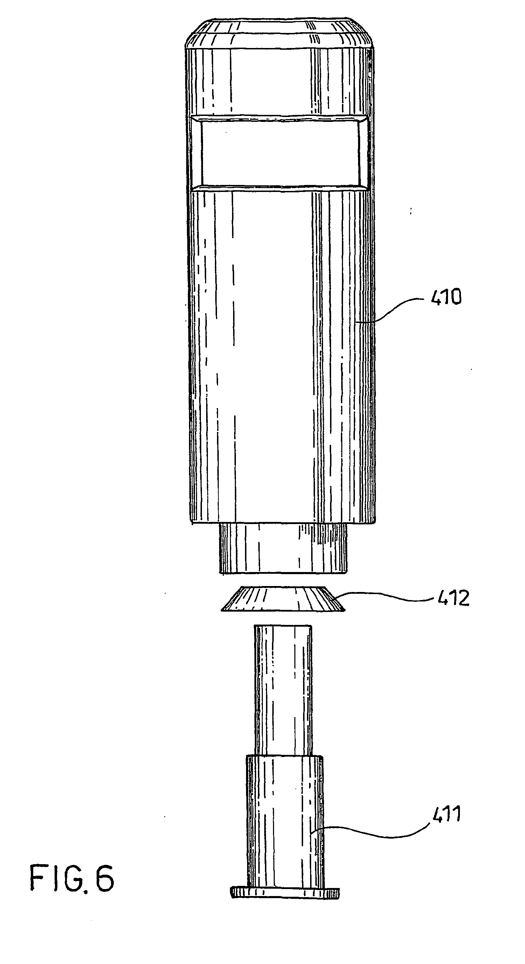

. Fig. 6 illustrates an exploded view of a detail of a coffee maker according to the invention;

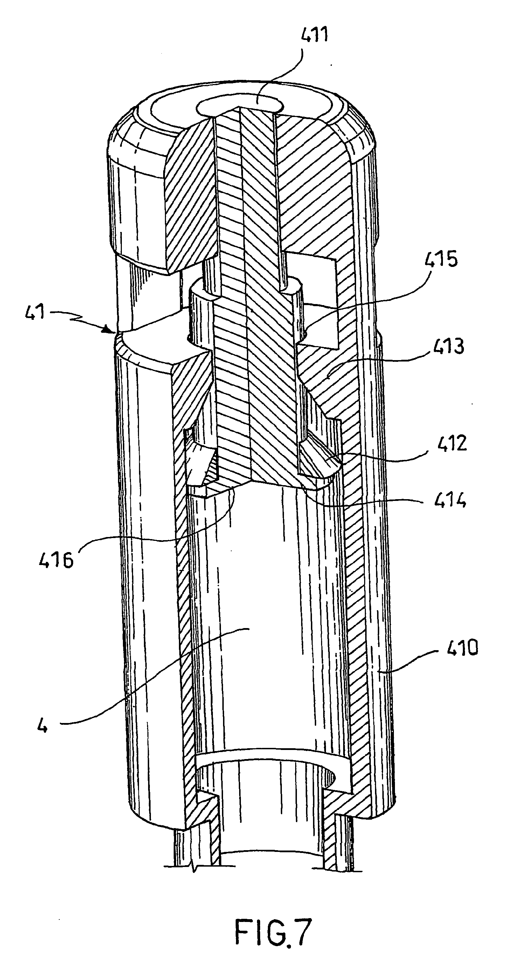

. Fig. 7 illustrates a partially sectional, perspective view of the detail from Fig. 6 in a first operating configuration;

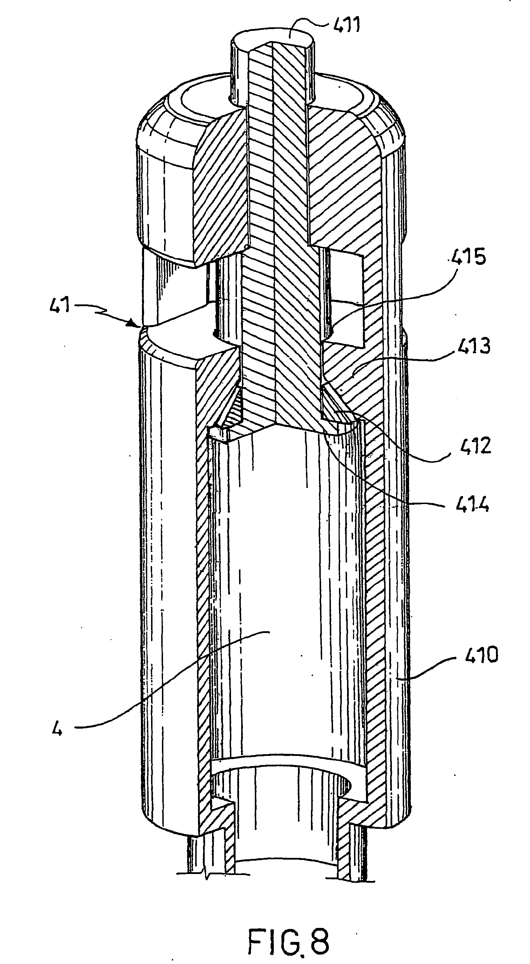

. Fig. 8 illustrates a partially sectional, perspective view of the detail from Fig. 7 in a second operating configuration;

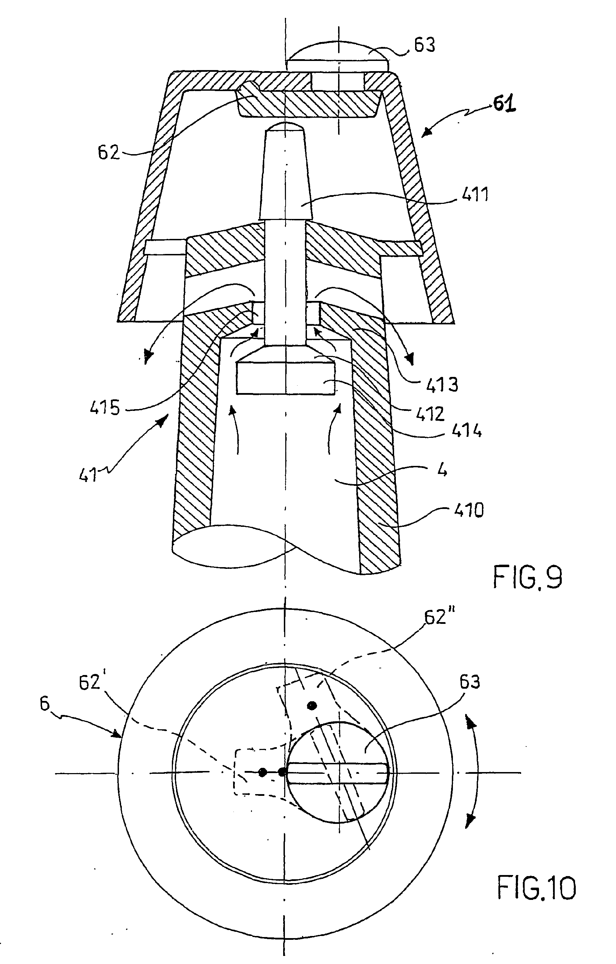

. Fig. 9 illustrates a side sectional view of a detail of an embodiment of the coffee maker according to the invention;

. Fig. 10 illustrates a top view, partially in phantom, of the detail from Fig. 9;

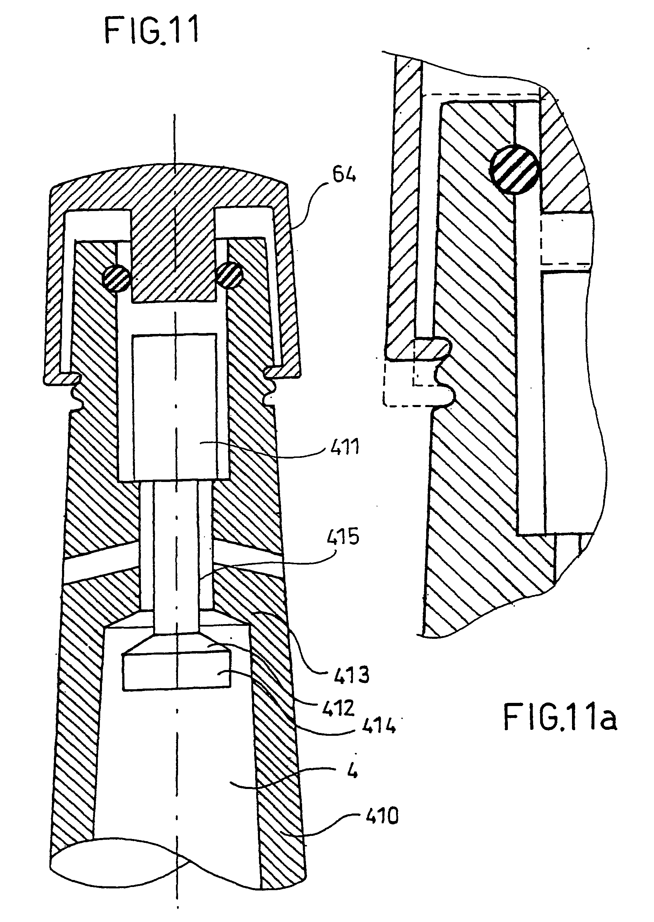

. Fig. 11 illustrates a side sectional view of a detail of an embodiment of the coffee maker according to the invention;

. Fig. 11.a illustrates a detail of Fig. 11.

. The meanings of the words "upper" and "lower", or "high" and "low", or "above" and "below", and the like, will be referred below to the coffee maker in its normal standing orientation. The normal standing condition is when the coffee maker can be firmly placed on a cooker in order to prepare the coffee beverage, or when the upper vessel is capable of containing the greatest amount of beverage without leakage.

. With reference to said figures, a coffee maker according to the invention has been generally designated with 1. The coffee maker 1 comprises a boiler 2, a collecting vessel 3 and a duct 4 suitable to place the boiler 2 and the collecting vessel 3 in fluid communication with each other.

. In accordance with an embodiment, the duct 4 places the lower region of the boiler 2 in communication with the upper region of the collecting vessel 3.

. A chamber 5 is formed along the duct 4, which is suitable to contain the coffee powder and suitable to avoid stopping the fluid continuity of the duct 4.

. The coffee maker 1 further comprises a safety valve 21 being arranged between the boiler 2 and the external environment. The safety valve 21 is suitable to adopt a closed operating configuration and an opened operating configuration. The safety valve 21 is suitable to pass from the closed configuration to the opened configuration after it has exceeded a predetermined pressure release threshold value within the boiler 2.

. The safety valve 21, accordingly, is suitable to hold the boiler 2 sealingly closed when the inner pressure value is lower than the release threshold value. Furthermore, the safety valve 21 is suitable to place the inside of the boiler 2 in fluid communication with the external environment when the inner pressure value exceeds the release threshold value.

. In accordance with an embodiment of the invention, the predetermined release threshold value at which the safety valve 21 passes from the closed configuration to the opened configuration ranges between 0.5-0.7 bars, in terms of differential pressure or difference from atmospheric pressure.

. Preferably, in terms of differential pressure, the release threshold value ranges between 0.55-0.65 bars. Still more preferably, the release threshold value ranges between 0.58-0.62 bars.

. The coffee maker 1 further comprises a delivery control valve 41 that is placed along the duct 4. The delivery control valve 41 is suitable to adopt an opened operating configuration and a closed operating configuration.

. The delivery control valve 41 is suitable to pass from the opened configuration to the closed configuration upon there occur the conditions of (static and dynamic) pressure and flow rate immediately preceding the end of the water draught within the boiler 2 and the consequent passage of the high-temperature steam through the coffee powder.

. The delivery control valve 41 is thus adapted to maintain the duct 4 opened until the conditions of pressure and flow rate are those in which the water from the boiler 2 still has a temperature less than 90-95°C and is still in the liquid state. The delivery control valve 41 is thus suitable to maintain the duct 4 opened under the so-called extraction flow conditions.

. Furthermore, the delivery control valve 41 is adapted to occlude the duct 4, i.e. stop the fluid communication between the inside of the boiler 2 and the collecting vessel 3, before the water from the boiler 2 along the duct 4 reaches excessive temperatures (100-105°C) or even passes from the liquid to the gaseous phase. The delivery control valve 41 is thus suitable to occlude the duct 4 under the so-called overextraction flow conditions.

. The pressure within the duct 4 immediately upstream of the delivery control valve 41 has been identified as a parameter allowing one to observe the passage from the extraction to the overextraction conditions in a reliable and repeatable manner.

. In accordance with an embodiment of the invention, the delivery control valve 41 responds to the pressure conditions occurring immediately upstream thereof. Particularly, the delivery control valve 41 shifts from the opened configuration to the closed configuration when a predetermined control threshold value has been exceeded.

. The control threshold value is reached within the duct 4 immediately upstream of the valve 41 when a boiler threshold value is reached within the boiler 2. When the pressure within the boiler 2 is lower than the boiler threshold value, the flow conditions allow the extraction step to carry on. When the pressure within the boiler 2 is higher than the boiler threshold value, lacking any action by the valve 41, the flow conditions will lead to the overextraction step.

. In accordance with an embodiment of the invention, the boiler threshold value, to which the delivery control valve 41 passes from the opened configuration to the closed configuration is less than or equal to the release threshold value.

. In accordance with an embodiment, the boiler threshold value ranges between 0.3-0.5 bars, in terms of differential pressure.

. Preferably, the boiler threshold value ranges between 0.35-0.45 bars in terms of differential pressure. Still more preferably, the boiler threshold value ranges between 0.38-0.42 bars.

. The operation of a boiler 1 according to the invention is described below with reference to Fig. 1 to 5.

. In Fig. 1 a coffee maker is illustrated, which is ready to be placed on a heat source, such as a cooker. In a manner known per se, the boiler 2 comprises a suitable amount of water and the chamber 5 a suitable amount of coffee powder. The pressure within the boiler 2, equal to the atmospheric pressure, is lower than the boiler threshold value and release threshold value. Consequently, the safety valve 21 is closed and the delivery control valve 41 is opened.

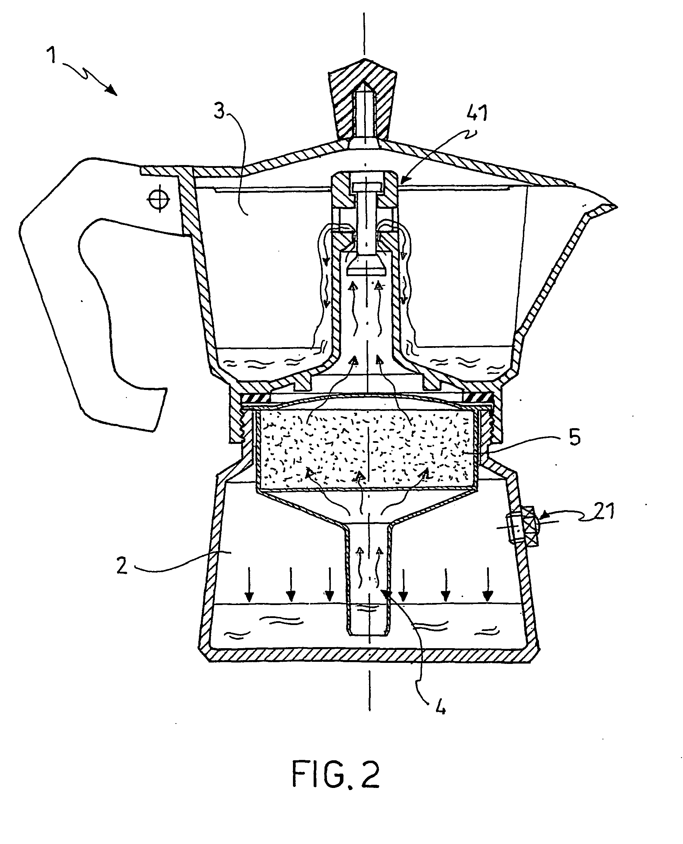

. In Fig. 2, the heat supplied to the coffee maker by the heat source, such as the cooker, causes the pressure to increase within the boiler 2. The pressure within the boiler 2 is higher than the atmospheric pressure but lower than the boiler threshold value. Consequently, the safety valve 21 is closed and the delivery control valve 41 is opened. The action of pressure (indicated by the full arrows) causes the water to flow upwards, along the duct 4 (indicated by the undulated arrows). The water thus passes through the chamber 5 containing the coffee powder, becomes coffee beverage and flows into the collecting vessel 3.

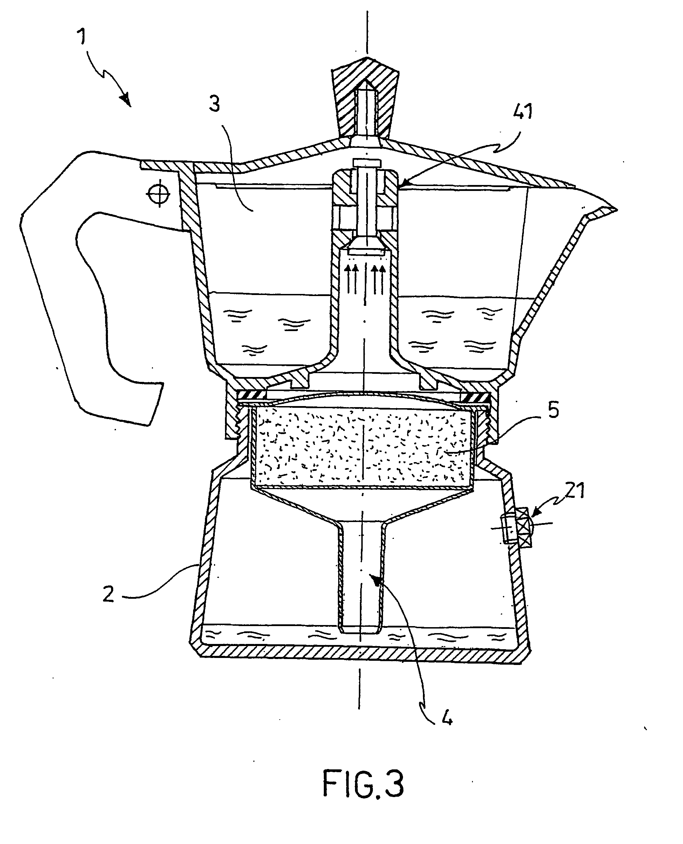

. In Fig. 3, the further heat being supplied to the coffee maker by the heat source, such as the cooker, causes a further pressure increase within the boiler 2. The pressure within the boiler 2 is higher than the boiler threshold value and lower than the release threshold value. Consequently, both the safety valve 21 and the delivery control valve 41 are closed. It is the action of the fluid pressure along the duct 4 (indicated by the full arrows) that causes the delivery control valve 41 to close. The water flow within the duct 4 is stopped and the pressure within the boiler 2 keeps to increase.

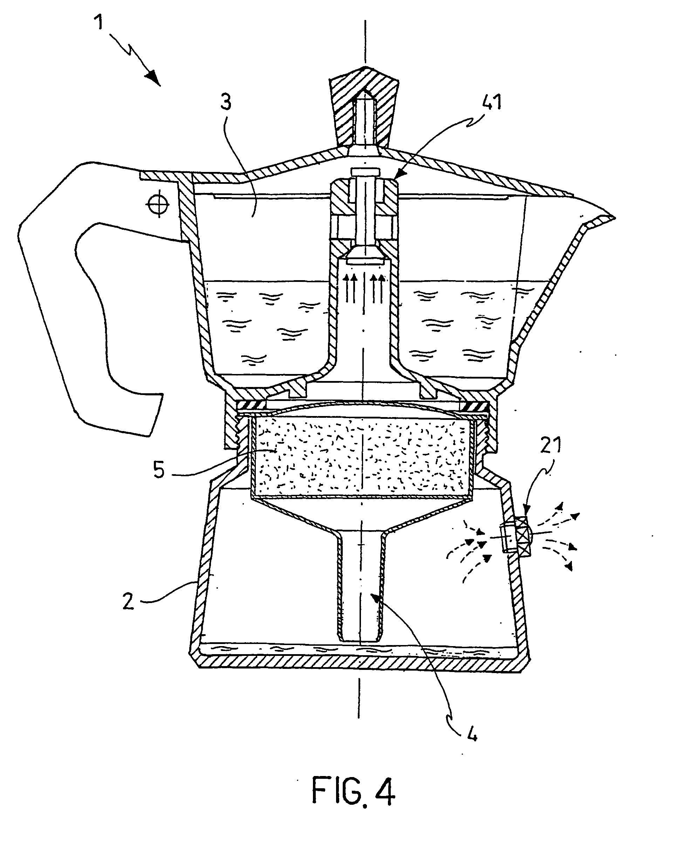

. In Fig. 4, the further heat supplied to the coffee maker by the heat source, such as the cooker, causes a further pressure increase within the boiler 2. The pressure within the boiler 2 is higher than the release threshold value. Consequently, the safety valve 21 is opened and the delivery control valve 41 is closed. It is the action of the fluid pressure along the duct 4 (indicated by the full arrows) that causes the delivery control valve 41 to close. The pressure within the boiler causes the safety valve 21 to open. A water steam flow is created (indicated with the dotted arrows) through the safety valve 21 towards the external environment and the pressure decreases within the boiler 2.

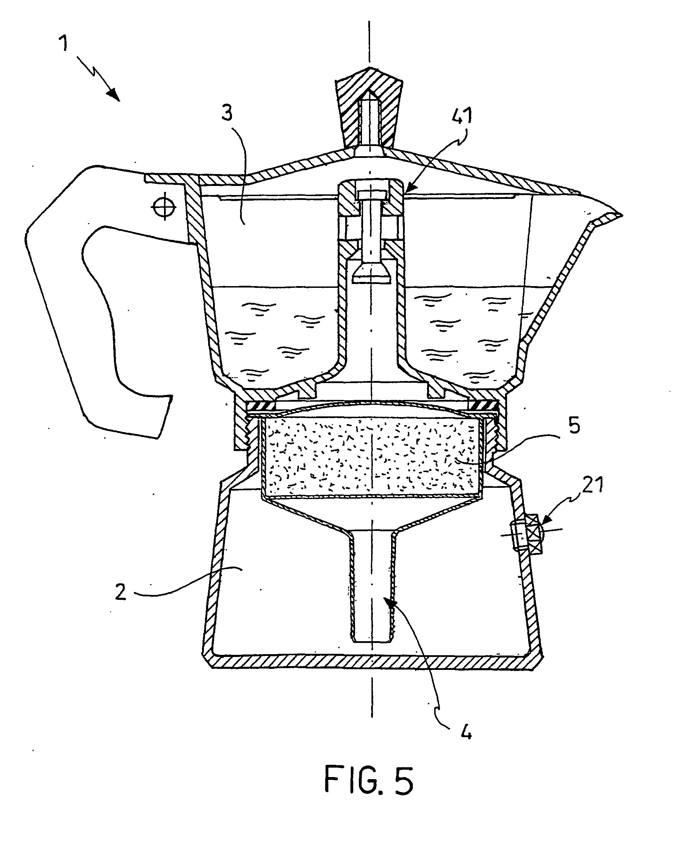

. In Fig. 5, the coffee maker 1 is completing the preparation of the coffee beverage. The pressure within the boiler 2 is equal to the atmospheric pressure. Consequently, the safety valve 21 is closed and the delivery control valve 41 is opened. The boiler 2 is empty, while the collecting vessel 3 contains the coffee beverage produced.

. As those skilled in the art may easily appreciate from the above, the operation of the coffee maker 1 according to the invention allows stopping the water from passing through the chamber 5 when the pressure and temperature within the boiler 2 have reached values that are deemed excessive. Thereby, the coffee maker 1 according to the invention restrains the production of the coffee beverage to its best part, and prevents the water at excessive temperature and pressure from passing through the coffee powder. A coffee beverage is thus obtained which has definitely improved general organoleptic characteristics.

. In accordance with the embodiment of the invention as illustrated in Fig. 6 to 8, the delivery control valve 41 comprises a chimneypot 410 and a cursor 411.

. The chimneypot 410 comprises an inner annular relief 413. In accordance with the embodiment shown in Fig. 7 and 8, the inner annular relief 413 is tapered. Thereby, the inner annular relief 413 develops in such a way that the fluid flow is channelled to the center of the duct 4.

. In accordance with the embodiments illustrated, the cursor 411 is slidingly housed within the chimneypot 410. The cursor 411 comprises an outer annular relief 414. The cursor 411 is suitable to slide between two positions. In a first position, as illustrated in Fig. 7, the delivery control valve 41 is caused to open. In the second position, as illustrated in Fig. 8, the delivery control valve 41 is caused to close.

. When the cursor is in the first position (see Fig. 7), between the inner annular relief 413 of the chimneypot 410 and the stem of the cursor there remains an annular passageway 415 suitable for allowing the coffee beverage flowing along the duct to pass therethrough.

. In accordance with the embodiment of Fig. 7 and 8, between the inner diameter of the inner annular relief 413 and the external diameter of the portion of the stem of the cursor 411 facing the inner annular relief 413 there is a slight difference. In accordance with an embodiment, the difference between the diameters is lower than 2.5 mm, preferably lower than 1.5 mm.

. Half this difference is the virtual width of the annular passageway 415 if the cursor 411 and chimneypot 410 were perfectly co-axial. Such a narrow annular passageway 415 allows the conditions of the fluid flow rising up along the duct 4 and facing the annular passageway 415 to be stabilized. The coffee beverage flow, which is stabilized along the entire circumference of the annular passageway 415, shows a smooth behaviour when passing through the delivery control valve 41.

. When the coffee maker is placed in its normal standing orientation, the cursor 411, due to its weight, moves to the first position in which the delivery control valve 41 is open.

. When the pressure increases within the boiler 2, the flow rate and speed of the fluid facing the annular passageway 415 are also increased. Due to the stabilization of the fluid flow in the vicinity of the annular passageway 415, an operating thrust can be obtained by the same pressing against the bottom 416 of the cursor 411. When the pressure against the bottom 416 of the cursor 411 exceeds the control threshold value, the operating thrust against the bottom 416 overcomes the other forces acting on the cursor 411 and moves the latter to the second closed position.

. When the cursor is in the second position (see Fig. 8), the outer annular relief 414 of the cursor 411 abuts against the inner annular relief 413 of the chimneypot 410. Thereby, the closure of duct 4 is achieved.

. In accordance with the embodiments of the annexed figures, between the two annular relieves there is interposed a gasket 412 that is tapered in a complementary manner relative to the inner annular relief 414 of the cursor 411. In other possible embodiments, the gasket 412 can be integral with the inner annular relief 413 of the chimneypot 410, it can have different shapes or can be not provided.

. When provided, the gasket 412 is made of a soft material, preferably suitable for contact with hot beverages.

. When the coffee machine is being used and the pressure within the boiler 2 is higher than the boiler threshold value, the force generated by the pressure on the bottom 416 of the cursor 411 causes the same to shift to the second position in which the delivery control valve 41 is closed.

. In accordance with several possible embodiments of the invention, the coffee maker 1 further comprises selection means 6 in order to prevent the delivery control valve 41 from moving from the opened configuration to the closed configuration.

. In accordance with the embodiment in Fig. 9 and 10, for example, on top of the duct 4 there is applied a fixed lid 61 that is integral with the coffee maker 1, such as fixed to the chimneypot 410. A tab 62 is placed within the fixed lid 61, which is movable by means of a knob 63 between a locked position and an unlocked position.

. When the tab 62 is in the locked position (illustrated in Fig. 9 and indicated with 62' in Fig. 10) it is suitable to limit the travel of the cursor 411. By limiting the travel of the cursor 411, the tab 62 prevents the delivery control valve 41 from adopting the closed configuration, thus actually preventing the operation of the same.

. When the tab 62 is in the unlocked position (indicated with 62" in Fig. 10), it does not interfere with the travel of the cursor 411.

. In other words, the knob 63 allows one to select between two different operating modes of the coffee maker according to the invention.

. One mode is that in which the tab 62 prevents the delivery control valve 41 from operating. In this mode, the coffee maker 1 according to the invention operates in the same way as a known coffee maker.

. Another mode is that in which the tab 62 does not interfere with the operation, of the delivery control valve 41. In this mode, the coffee maker 1 according to the invention operates in the same way as described above with reference to Fig. 1 to 5.

. In accordance with the embodiment from Fig. 11, for example, on the top of the duct 4 there is applied a movable lid 64, for example, mounted on the chimneypot 410. The lid 64 is snap-movable between a locked position and an unlocked position.

. When the lid 64 is in the locked position (illustrated with a dotted line in Fig. 11.a), it is suitable to limit the travel of the cursor 411. By limiting the travel of the cursor 411, the lid 64 prevents the delivery control valve 41 from adopting the closed configuration, thus actually preventing the same from operating.

. When the movable lid 64 is in the unlocked position (illustrated in Fig. 11 and 11.a), it does not interfere with the travel of cursor 411.

. In other words, the movable lid 64 allows one to select between two different operating modes of the coffee maker according to the invention.

. One mode is that in which the lid 64 prevents the delivery control valve 41 from operating. In this mode, the coffee maker 1 according to the invention operates in the same way as a known coffee maker.

. Another mode is that in which the movable lid 64 does not interfere with the operation of the delivery control valve 41. In this mode, the coffee maker 1 according to the invention operates in the same way as described above with reference to Fig. 1 to 5.

. To the preferred embodiments of the coffee maker described above, those skilled in the art, aiming at satisfying contingent requirements, may carry out a number of modifications, adjustments and replacements of elements with others functionally equivalent, without departing from the scope of the claims below. Each of the characteristics described as belonging to a feasible embodiment can be provided independently from the other embodiments described.

## Claims

1. A coffee maker (1) comprising:
a boiler (2);
a collecting vessel (3);
a duct (4) suitable to place the boiler (2) and the collecting vessel (3) in communication with each other; and
a safety valve (21) suitable to place the boiler (2) in fluid communication with the external environment, when a pressure release threshold value has been exceeded within the boiler (2);
wherein said coffee maker (1) further comprises a delivery control valve (41), **characterised in that** said delivery control valve (41) is suitable to stop the fluid communication between the boiler (2) and the collecting vessel (3) when a pressure control threshold value is exceeded in the vicinity of said delivery control valve (41).

2. The coffee maker (1) according to claim 1
wherein the predetermined release threshold value ranges between 0.5-0.7 bars, in terms of differential pressure.

3. The coffee maker (1) according to claim 1 or 2 , wherein the delivery control valve (41) is placed along the duct (4).

4. The coffee maker (1) according to any preceding claim, wherein said delivery control valve (41) is suitable to hold the duct (4) opened when the flow pressure values are lower than the control threshold value.

5. The coffee maker (1) according to the preceding claim, wherein said release threshold value is higher than or equal to a boiler threshold value reached within the boyler when said control threshold value is reached.

6. The coffee maker (1) according to the preceding claim, wherein the boiler threshold value ranges between 0.3-0.5 bars, in terms of differential pressure.

7. The coffee maker (1) according to any preceding claim, wherein said delivery control valve (41) comprises a chimneypot (410) and a cursor (411) that is slidingly housed within the chimneypot (410) for opening/closing the delivery control valve (41).

8. The coffee maker (1) according to claim 7,
wherein said chimneypot (410) comprises an inner annular relief (413) and said cursor comprises an outer annular relief (414) suitable to abut against the inner annular relief (413) of the chimneypot (410) when the cursor (411) takes the position that determines the closure of the delivery control valve (41).

9. The coffee maker (1) according to the preceding claim, wherein a gasket (412) is interposed between said outer annular relief (414) and said inner annular relief (413).

10. The coffee maker (1) according to claim 8 or 9,
wherein an annular passageway (415) is left between the inner annular relief (413) of the chimneypot (410) and the stem of the cursor (411), which is suitable for allowing the coffee beverage that flows along the duct (4) to pass therethrough.

11. The coffee maker (1) according to claim 10,
wherein said passageway (415) has a width lower than 1.25 mm.

12. The coffee maker (1) according to any preceding claim, wherein the coffee maker (1) comprises selection means (6) to prevent the delivery control valve (41) from shifting from the opened configuration to the closed configuration.

13. The coffee maker (1) according to the preceding claim, wherein said selection means (6) comprise a fixed lid (61) that is integral with the coffee maker (1), which comprises a tab (62) movable between a locked position and an unlocked position, and
wherein the tab (62) is suitable, in the locked position, to prevent the delivery control valve (41) from operating.

14. The coffee maker (1) according to claim 13,
wherein said selection means (6) comprise a knob (63) suitable to move said tab (62) between the locked position and the unlocked position, and thus selecting two different operating modes for the coffee maker (1).

15. The coffee maker (1) according to claim 12,
wherein said selection means (6) comprise a lid (64) movable between a locked position and an unlocked position, and
wherein the movable lid (64) is suitable, in the locked position, to prevent the delivery control valve from operating (41).

## Patentansprüche

1. Eine Kaffeemaschine (1) umfassend
einen Wasserkochbehälter (2),
einen Sammelbehälter (3),
eine Rohrleitung (4), die geeignet ist, den Wasserkochbehälter (2) mit dem Sammelbehälter (3) zu verbinden, und
ein Überdruckventil (21), das geeignet ist, den Wasserkochbehälter (2) mit der Außenumgebung in eine Fluidverbindung zu bringen, wenn ein Druckentlastungsgrenzwert in dem Wasserkochbehälter (2) überschritten wird,
wobei die Kaffeemaschine (1) ferner ein Ausgabesteuerventil (41) umfasst,
**dadurch gekennzeichnet,**
**dass** das Ausgabesteuerventil (41) geeignet ist, die Fluidverbindung zwischen dem Wasserkochbehälter (2) und dem Sammelbehälter (3) zu unterbrechen, wenn ein Drucksteuerungsgrenzwert in der Nähe des Ausgabesteuerventils (41) überschritten wird.

2. Kaffeemaschine (1) nach Anspruch 1, wobei der vorbestimmte Entlastungsgrenzwert zwischen 0,5 - 0,7 bar hinsichtlich der Druckdifferenz beträgt.

3. Kaffeemaschine (1) nach Anspruch 1 oder 2, wobei das Ausgabesteuerventil (41) entlang der Rohrleitung (4) angeordnet ist.

4. Kaffeemaschine (1) nach einem der vorangehenden Ansprüche, wobei das Ausgabesteuerventil (41) geeignet ist, die Rohrleitung (4) offen zu halten, wenn die Fließdruckwerte niedriger als der Steuerungsgrenzwert sind.

5. Kaffeemaschine (1) nach dem vorangehenden Anspruch,
wobei der Entlastungsgrenzwert höher oder gleich einem Wasserkochbehältergrenzwert ist, der in dem Wasserkochbehälter erreicht wird, wenn der Steuerungsgrenzwert erreicht ist.

6. Kaffeemaschine (1) nach dem vorangehenden Anspruch,
wobei der Wasserkochbehältergrenzwert zwischen 0,3 - 0,5 bar hinsichtlich der Druckdifferenz beträgt.

7. Kaffeemaschine (1) nach einem der vorangehenden Ansprüche, wobei das Ausgabesteuerventil (41) einen schornsteinartigen Aufsatz (410) und einen Läufer (411) umfasst, der in dem schornsteinartigen Aufsatz (410) zum Öffnen/ Schließen des Ausgabesteuerventils (41) gleitend aufgenommen ist.

8. Kaffeemaschine (1) nach Anspruch 7, wobei der schornsteinartige Aufsatz (410) eine innere ringförmige Kontur (413) umfasst und der Läufer eine äußere ringförmige Kontur (414) umfasst, die geeignet ist, gegen die innere ringförmige Kontur (413) des schornsteinartigen Aufsatzes (410) zur Anlage zu kommen, wenn der Läufer (411) die Position einnimmt, die das Schließen des Ausgabesteuerventils (41) darstellt.

9. Kaffeemaschine (1) nach dem vorangehenden Anspruch,
wobei eine Dichtung (412) zwischen der äußeren ringförmigen Kontur (414) und der inneren ringförmigen Kontur (413) angeordnet ist.

10. Kaffeemaschine (1) nach Anspruch 8 oder 9, wobei ein ringförmiger Durchlass (415) zwischen der inneren ringförmigen Kontur (413) des schornsteinartigen Aufsatzes (41) und dem Schaft des Läufers (411) verbleibt, der ermöglicht, dass das Kaffeegetränk, das entlang der Rohrleitung (4) fließt, diesen passieren kann.

11. Kaffeemaschine (1) nach Anspruch 10, wobei der Durchlass (415) eine Breite aufweist, die geringer als 1,25 mm ist.

12. Kaffeemaschine (1) nach einem der vorangehenden Ansprüche, wobei die Kaffeemaschine (1) Auswahlmittel (6) umfasst, die verhindern, dass das Ausgabesteuerventil (41) aus der Offenstellung in die Schließstellung verlagert wird.

13. Kaffeemaschine (1) nach dem vorangehenden Anspruch,
wobei die Auswahlmittel (6) einen fixierten Deckel (61) umfassen, der mit der Kaffeemaschine (1) einstückig ausgebildet ist, und der eine Zunge (62) umfasst, die zwischen einer verriegelten Position und einer nicht verriegelten Position beweglich ist, und wobei die Zunge (62) in der verriegelten Position geeignet ist, zu verhindern, dass das Ausgabesteuerventil (41) tätig wird.

14. Kaffeemaschine (1) nach Anspruch 13, wobei die Auswahlmittel (6) einen Knopf (63) umfassen, der geeignet ist, die Zunge (62) zwischen der verriegelten Position und der nicht verriegelten Position zu bewegen, wodurch zwei verschiedene Betriebsmodi für die Kaffeemaschine (1) wählbar sind.

15. Kaffeemaschine (1) nach Anspruch 12, wobei die Auswahlmittel (6) einen Deckel (64) umfassen, der zwischen einer verriegelten Position und einer nicht verriegelten Position beweglich ist, und
wobei der bewegliche Deckel (64) in der verriegelten Position geeignet ist, zu verhindern, dass das Ausgabesteuerventil (41) tätig wird.

## Revendications

1. Cafetière (1) comprenant :
- une chaudière (2) ;
- un récipient de collecte (3) ;
- un conduit (4) apte à mettre la chaudière (2) et le récipient de collecte (3) en communication l'un avec l'autre ; et
- une soupape de sécurité (21) apte à mettre la chaudière (2) en communication fluidique avec l'environnement extérieur, lorsqu'une valeur de seuil de libération de pression a été dépassée à l'intérieur de la chaudière (2);
ladite cafetière (1) comprenant de plus une soupape de contrôle de débit (41), **caractérisée en ce que** ladite soupape de contrôle de débit (41) est apte à stopper la communication fluidique entre la chaudière (2) et le récipient de collecte (3) lorsqu'une valeur de seuil de contrôle de pression est dépassée à proximité de ladite soupape de contrôle de débit (41).

2. Cafetière (1) selon la revendication 1, dans laquelle la valeur de seuil de libération prédéterminée se trouve entre 0,5-0,7 bar, en termes de pression différentielle.

3. Cafetière (1) selon la revendication 1 ou 2, dans laquelle la soupape de contrôle de débit (41) est placée le long du conduit (4).

4. Cafetière (1) selon une quelconque revendication précédente, dans laquelle ladite soupape de contrôle de débit (41) est apte à maintenir le conduit (4) ouvert lorsque les valeurs de pression d'écoulement sont inférieures à la valeur de seuil de contrôle.

5. Cafetière (1) selon la revendication précédente, dans laquelle ladite valeur de seuil de libération est supérieure ou égale à une valeur de seuil de la chaudière atteinte dans la chaudière lorsque ladite valeur de seuil de contrôle est atteinte.

6. Cafetière (1) selon la revendication précédente, dans laquelle la valeur de seuil de la chaudière se trouve entre 0,3-0,5 bar, en termes de pression différentielle.

7. Cafetière (1) selon une quelconque revendication précédente, dans laquelle ladite soupape de contrôle de débit (41) comprend un tuyau de cheminée (410) et un curseur (411) qui est logé, de façon coulissante, dans le tuyau de cheminée (410) pour ouvrir/fermer la soupape de contrôle de débit (41).

8. Cafetière (1) selon la revendication 7, dans laquelle ledit tuyau de cheminée (410) comprend une saillie annulaire interne (413) et ledit curseur comprend une saillie annulaire externe (414) apte à buter contre la saillie annulaire interne (413) du tuyau de cheminée (410), lorsque le curseur (411) prend la position qui détermine la fermeture de la soupape de contrôle de débit (41).

9. Cafetière (1) selon la revendication précédente, dans laquelle un joint d'étanchéité (412) est disposé entre ladite saillie annulaire externe (414) et ladite saillie annulaire interne (413).

10. Cafetière (1) selon la revendication 8 ou 9, dans laquelle un passage annulaire (415) est laissé entre la saillie annulaire interne (413) du tuyau de cheminée (410) et la tige du curseur (411), qui est destiné à permettre au café qui s'écoule le long du conduit (4), de passer à travers celui-ci.

11. Cafetière (1) selon la revendication 10, dans laquelle ledit passage (415) a une largeur inférieure à 1,25mm.

12. Cafetière (1) selon une quelconque revendication précédente, dans laquelle la cafetière (1) comprend des moyens de sélection (6) pour empêcher le déplacement de la soupape de contrôle de débit (41) de la configuration ouverte vers la configuration fermée.

13. Cafetière (1) selon la revendication précédente, dans laquelle lesdits moyens de sélection (6) comprennent un couvercle fixe (61) qui est solidaire de la cafetière (1), qui comprend une patte (62) mobile entre une position bloquée et une position débloquée, et dans laquelle la patte (62) est apte, dans la position bloquée, à empêcher le fonctionnement de la soupape de contrôle de débit (41).

14. Cafetière (1) selon la revendication 13, dans laquelle lesdits moyens de sélection (6) comprennent un bouton (63) apte à déplacer ladite patte (62) entre la position bloquée et la position débloquée, et à sélectionner ainsi deux modes de fonctionnement différents de la cafetière (1).

15. Cafetière (1) selon la revendication 12, dans laquelle lesdits moyens de sélection (6) comprennent un couvercle (64) mobile entre une position bloquée et une position débloquée, et dans laquelle le couvercle mobile (64) est apte à empêcher, dans la position bloquée, le fonctionnement de la soupape de contrôle de débit (41).
